(19) Europäisches Patentamt
European Patent Office
Office européen des brevets

(11) **EP 1 792 682 B1**

(12) **EUROPÄISCHE PATENTSCHRIFT**

(45) Veröffentlichungstag und Bekanntmachung des Hinweises auf die Patenterteilung:
**04.11.2009 Patentblatt 2009/45**

(51) Int Cl.:
***B23F 7/00*** *(2006.01)*   ***F04C 2/18*** *(2006.01)*

(21) Anmeldenummer: **05026434.0**

(22) Anmeldetag: **03.12.2005**

(54) **Zahnradradpumpe mit Pfeilverzahnung**

Gear pump with herringbone gearing

Pompe à engrenages avec roues à chevrons

(84) Benannte Vertragsstaaten:
**CH DE LI**

(43) Veröffentlichungstag der Anmeldung:
**06.06.2007 Patentblatt 2007/23**

(73) Patentinhaber: **Maag Pump Systems Textron AG**
**8154 Oberglatt (CH)**

(72) Erfinder:
• **Sauter, Martin**
**8425 Oberembrach (CH)**
• **Sonder, Hans**
**8610 Uster (CH)**

(74) Vertreter: **Rigling, Peter Daniel**
**Troesch Scheidegger Werner AG**
**Schwäntenmos 14**
**8126 Zumikon (CH)**

(56) Entgegenhaltungen:
**DE-B3- 10 300 407    GB-A- 190 917 530**
**US-A- 1 490 457**

• **PATENT ABSTRACTS OF JAPAN Bd. 2000, Nr. 05, 14. September 2000 (2000-09-14) & JP 2000 033639 A (DAIHAN:KK), 2. Februar 2000 (2000-02-02)**

**Beschreibung**

Die vorliegende Erfindung betrifft ein Verfahren nach dem Oberbegriff von Patentanspruch 1, eine Welle nach dem Oberbegriff von Patentanspruch 4, eine Zahnradpumpe mit der Welle sowie eine Verwendung der Zahnradpumpe.

Zahnradpumpen sind bekannt als Verdrängerpumpen (Positive Displacement Pumps). Von der Saugseite werden die Zahnlücken von zwei ineinander greifenden Zahnrädern mit Fördermedium gefüllt, das mit der Rotationsbewegung der Zahnräder auf die Druckseite transportiert und dort von den Zähnen des Gegenzahnrades aus den Zahnlücken verdrängt wird. Die diskrete Abfolge von Ausquetschvorgängen der einzelnen Zähne hat eine pulsationsbehaftete Förderung zur Folge. Eine pulsationsfreie Strömung könnte zwar - wenn auch nur theoretisch - durch unendlich viele Zähne erreicht werden.

In der Praxis wird bei der Wahl der Anzahl Zähne für die verwendeten Zahnräder ein geeigneter Kompromiss zwischen einem maximalen Fördervolumen pro Umdrehung und einer ausreichenden Zahnfussfestigkeit gesucht. Es hat sich herausgestellt, dass die Zahnräder bei Zahnradpumpen in den meisten Anwendungen zwischen 10 und 20 Zähne aufweisen. Dabei wird in Kauf genommen, dass die Strömung eine gewisse Pulsation hat.

Eine schon lange bekannte Möglichkeit, eine Pulsation der Strömung bei Zahnradpumpen zu verringern, besteht in der Verwendung von einer Pfeilverzahnung, wie in der DE 103 00 407 B3 offenbart, die als nächstliegender Stand der Technik angesehen wird. Bei diesen stehen immer mehrere Zähne im Eingriff und der Ausquetschvorgang verläuft sanfter. In der Praxis ist wegen hohen Viskositäten, Elastizitäten und anderen Effekten auch die Pfeilverzahnung nicht pulsationsfrei.

Fertigungsbedingt haben pfeilverzahnte Wellen jedoch den Nachteil, dass sich eine exakte Pfeilverzahnung, insbesondere im Spitz der Verzahnung, nicht oder nur sehr aufwändig herstellen lässt.

Traditionell werden Verzahnungen aus einer Welle gehobelt und anschliessend geschliffen. Beiden Verfahren ist gemeinsam, dass das Werkzeug vor und nach dem Bearbeitungseingriff einen freien Auslauf benötigt. Bei der Herstellungen von Getriebezahnrädern mit Pfeilverzahnungen ist dies kein Problem, da in der Mitte der Zahnräder ein Bereich ausgestochen werden kann, in dem der Hobel bzw. die Schleifscheibe frei auslaufen können. Der Einsatz solchermassen hergestellter pfeilverzahnter Wellen mit einem Auslaufbereich in der Mitte verbietet sich allerdings bei Zahnradpumpen, da ein solcher Auslauf als Kurzschluss von der Druckseite auf die Saugseite wirken würde und damit zu unerwünschten Leckageverlusten in der Zahnradpumpe führen würde.

Die wirtschaftliche Herstellung von Pfeilverzahnungen ohne Freistich ist ein Problem. Für die Herstellung solcher pfeilverzahnter Wellen bieten sich daher nur noch Sonderverfahren wie z.B. Schleifen der Spitze mit kleinen Handschleifern, das Erodieren, Sintern oder ähnliche teure Verfahren an. Neben den deutlich höheren Kosten dieser Herstellverfahren fallen die schlechten Verzahnungsqualitäten in der Spitze negativ auf.

Eine andere Möglichkeit, solche Pfeilverzahnungen herzustellen, besteht darin, dass die beiden Schenkel der Pfeilverzahnung als einzelne Räder hergestellt und später auf einer Welle montiert werden, wobei die Montage kraft- und/oder formschlüssig erfolgen kann. Dazu bieten sich die Verfahren "Aufschrumpfen" bzw. "Keilverbindungen" an. Eine derartige Vorrichtung wurde auch von Oliver Grimm in "Ausgeflattert - Schmelzepumpe für hochwertige Extrudate" (Plastverarbeiter 49. Jahrgang, Nr. 9, Seite 50) beschrieben.

Diese bekannten Zahnradpumpen haben den Nachteil, dass die kraft- und formschlüssigen Verbindungen die übertragbaren Drehmomente der gesamten Zahnradwelle deutlich limitieren. Insbesondere bei der Verarbeitung von hochviskosen Polymerschmelzen reichen die übertragbaren Drehmomente dann oftmals nicht aus. Ein weiterer Nachteil bei diesen zusammengesetzten Wellen ist die Ausgestaltung des Wellenhinterstiches. Dieser kann hier nicht optimal ausgestaltet werden, um minimale Leckageverluste zwischen Wellen und Lager zu gewährleisten.

Der vorliegenden Erfindung liegt daher die Aufgabe zugrunde, zunächst ein Verfahren zur Herstellung von Wellen für eine Zahnradpumpe anzugeben, bei der die oben genannten Nachteile nicht bestehen.

Diese Aufgabe wird durch die im kennzeichnenden Teil von Anspruch 1 aufgeführten Merkmale gelöst. Weitere Ausgestaltungen der Erfindung, eine Welle, eine Zahnradpumpe mit der Welle sowie eine Verwendung der Zahnradpumpe sind in weiteren Ansprüchen angegeben.

Die Erfindung weist die folgenden Vorteile auf: Indem eine Ausnehmung in der Form eines Hinterstiches zwischen zwei Zahnradabschnitten mit unterschiedlichen oder gleichen Schrägungswinkeln der Verzahnung eingearbeitet und indem mindestens ein Füllelement, das entsprechend einem der angrenzenden Zahnradabschnitten ausgebildet wird, in die Ausnehmung eingebracht wird, lassen sich Wellen bzw. Zahnradpumpen mit einer Pfeilverzahnung vergleichsweise einfach herstellen, ohne dass die Fertigungsqualität in der Spitze der Pfeilverzahnung beeinträchtigt wird.

Die Erfindung wird nachfolgend anhand von Zeichnungen beispielsweise erläutert. Dabei zeigen:

Fig. 1 eine erste erfindungsgemässe Welle für eine Zahnradpumpe,

Fig. 2 eine zweite erfindungsgemässe Welle für die Zahnradpumpe,

Fig. 3 ein Füllelement für die erste Welle und

Fig. 4    ein Füllelement für die zweite Welle.

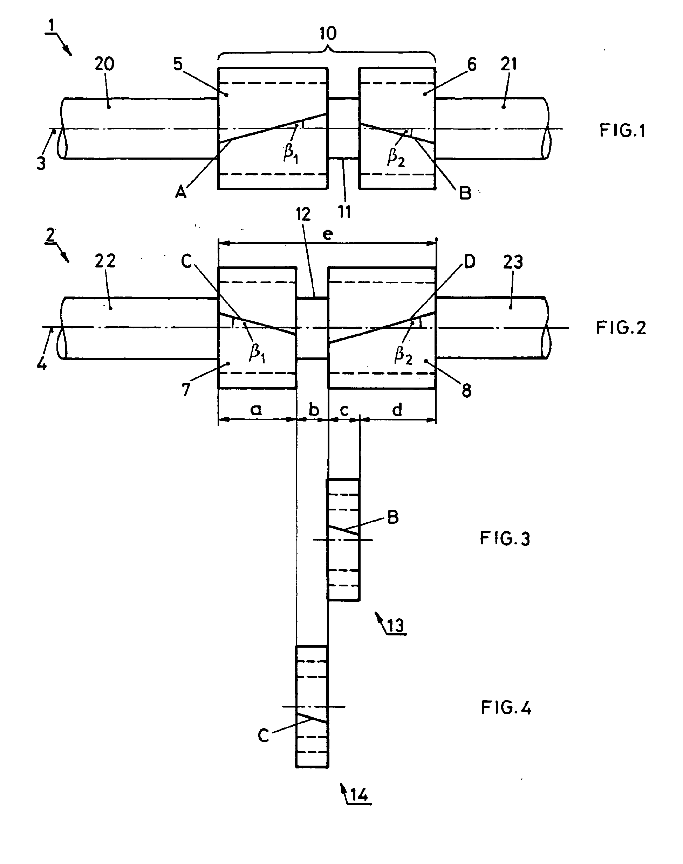

In den Fig. 1 und 2 sind zwei erfindungsgemässe Wellen 1 und 2 gezeigt, wie sie in Zahnradpumpen zum Einsatz kommen. Die Wellen 1 und 2 sind je aus einem Werkstück hergestellt und bestehen aus zwei seitlich angeordneten Lagerzapfen 20, 21 bzw. 22, 23 und je einem Verzahnungsbereich 10, in dem je zwei Zahnradabschnitte 5, 6 bzw. 7, 8 vorgesehen sind. Die Zahnräder weisen über den Verzahnungsbereich 10 eine Pfeilverzahnung auf. Schrägungswinkel $\beta_1$ und $\beta_2$, welche durch die Schrägstellungen der Verzahnung in den Zahnradabschnitten 5, 6 bzw. 7, 8 in Bezug auf die Längsachsen 3, 4 der Wellen 1, 2 definiert sind, sind in den Zahnradabschnitten 5 bis 8 durch Linien A, B, C und D angedeutet. Zwischen den Zahnradabschnitten 5 und 6 bzw. 7 und 8 ist eine Ausnehmung 11 bzw. 12 in der Form eines Hinterstiches vorgesehen, der mindestens so tief ist wie der Zahnfusskreis.

Die Ausnehmung 11 bzw. 12 ist vorgesehen, um den zur Herstellung der Zahnradabschnitte 5 bis 8 - bzw. deren Verzahnung - verwendeten Werkzeugen (Schleifscheibe, Hobel, etc.) einen Auslauf in der Wellenmitte zu gewährleisten. Der Auslauf für die Werkzeuge - d.h. die Ausnehmungen 11 und 12 - wird jedoch so klein wie möglich gehalten.

Damit kein Fördermedium von der Druckseite auf die Saugseite der Zahnradpumpe durch die Ausnehmungen 11 und 12 fliessen kann, müssen diese mit einem so genannten Füllelement 13 bzw. 14 (Fig. 3 und 4) aufgefüllt werden. Die Füllelemente 13 und 14 sind vorzugsweise mit einer passenden Verzahnung versehen. Hierzu werden in einem weiteren Fertigungsschritt die Füllelemente 13, 14 mit den gleichen Verzahnungsdaten hergestellt wie diejenigen auf der Zahnradpumpenwelle. Die fertig geschliffenen Füllelemente 13 und 14 (es handelt sich bei dieser Ausführungsvariante um eigentliche Zahnradscheiben) weisen eine Breite auf, die genau der Breite der jeweiligen Ausnehmung 11 bzw. 12 entspricht. Die Füllelemente 13 und 14 bilden einen Ring, der in so genannte Segmente geteilt werden muss (durch Brechen, Schneiden, etc.), damit die so vorliegenden Verzahnungssegmente in die Ausnehmung 11 bzw. 12 gelegt werden können. Die eingelegten Füllelemente 13 und 14 vervollständigen nun die Welle 1 bzw. 2 zu einer geschlossenen Pfeilverzahnung, wie dies für eine Zahnradpumpe erforderlich ist.

In einer weiteren Ausführungsform werden die Füllelemente 13, 14 - bzw. die diese bildenden Segmente - mit der entsprechenden Welle 1 bzw. 2 verbunden. Hierzu bieten sich verschiedenste übliche Verfahren an, wie beispielsweise Schweissen, Löten, Stumpfschweissen, Kleben oder Schrumpfen. Die Ausrichtung der Zahnradabschnitte 5 bis 8 auf der jeweiligen Welle 1 bzw. 2 mit dem jeweiligen Füllelement 13, 14 kann durch eine Lehre der Verzahnung oder eines einzelnen Zahnes erfolgen.

In einer anderen Ausführungsform der Erfindung werden lediglich die Füllelement 13 bzw. 14 (bzw.

deren Segmente) zu einem Ring fest zusammenzufügen, so dass dieser lose in der Ausnehmung 11 bzw. 12 liegt und durch die zweite Welle 2 bzw. 1 ausgerichtet wird.

Im Folgenden werden verschiedene Positionen für die Ausnehmungen 11 und 12 innerhalb des Verzahnungsbereiches 10 bzw. weitere Ausgestaltungen der Füllelemente 13, 14 erläutert:

Eine Ausführungsform besteht darin, die Ausnehmungen 11, 12 in der Mitte des Verzahnungsbereiches 10 zu positionieren. Die Füllelemente 13, 14 - bzw. deren Teile - können dabei als Gerade-, Schräg-, Bogen- oder Pfeilverzahnung ausgeführt sein. Ein Füllelement 13, 14 mit einer Bogen- oder Pfeilverzahnung ist denkbar, auch wenn der Pfeilspitz nicht auf den Übergang von Füllelement 13, 14 auf die Zahnradabschnitte 5, 6 bzw. 7, 8 fällt, denn ein schmales Füllelement 13, 14 ist immer noch einiges kostengünstiger herstellbar als wenn die gesamte Zahnradpumpenwelle aus einem Werkstück hergestellt werden muss.

Denkbar wäre auch eine Ausführungsform, bei der die Ausnehmungen 11, 12 nicht mit einer Verzahnung sondern nur mit einem Ring als Füllelement 13, 14 ausgefüllt sind, so dass bei kämmender Verzahnung in den Zahnradabschnitten 5, 6 bzw. 7, 8 keine Rückfluss von der Druck- auf die Saugseite der Zahnradpumpe entsteht. Bei dieser Ausführungsform müssen die Ausnehmungen 11, 12 der beiden Wellen 1, 2 im montierten Zustand exakt übereinstimmen.

In einer bevorzugten Ausgestaltung - wie sie in Fig. 1 bis 4 dargestellt ist - werden die Ausnehmungen 11 und 12 jeweils um die halbe Breite der jeweiligen Ausnehmung 11 bzw. 12 aus der Mitte der Verzahnung versetzt. Für die eine Welle 1 bzw. 2 nach links, für die andere Welle 2 bzw. 1 nach rechts, so dass die Ausnehmungen 11 und 12 beim kämmenden Zahnradwellenpaar nicht aufeinander zu liegen kommen.

Diese Variante hat den Vorteil, dass auf der einen Welle 1 bzw. 2 die linke Flanke breiter ist und das Drehmoment sicher überträgt. Auf der anderen Welle liegt dieser Drehmoment-übertragende Teil der Verzahnung aber auf der anderen Seite. Die beiden Füllelemente 13 und 14 werden also jeweils durch einen starken, "nicht geschwächten" Bereich der Verzahnung angetrieben bzw. ausgerichtet.

In dieser Ausführungsform werden die Füllelemente 13 und 14 mit einer Schrägverzahnung versehen, welche die gleichen Verzahnungsdaten aufweist wie die Hauptverzahnung. Damit wird eine geschlossene und symmetrische Pfeilverzahnung mit deren Vorteilen gebildet. Hier könnten die Segmente sogar lose eingelegt werden.

Wie aus den Fig. 1 bis 4 ersichtlich ist, sind die Ausnehmungen 11 und 12 gleich breit. So ist eine Breite b der Ausnehmung 12 gleich gross wie eine Breite c der Ausnehmung 11. Ferner weist der Zahnradabschnitt 5 eine Breite a+b, der Zahnradabschnitt 6 eine Breite d, der Zahnradabschnitt 7 eine Breite a und der Zahnradabschnitt 8 eine Breite c+d auf. Im dargestellten Ausführungsbeispiel gilt schliesslich aufgrund der Symmetrie die folgende Gleichung:

$$a + b = c + d = \frac{e}{2}$$

Es wird jedoch ausdrücklich darauf hingewiesen, dass diese Gleichung nicht zwingend erfüllt sein muss. Grundsätzlich eignet sich auch eine asymmetrische Ausgestaltung zur Erreichung der durch die Erfindung erhaltenen Vorteile. So kann insbesondere auch der nachstehende Ausdruck gelten:

$$a + b \neq c + d$$

bzw. insbesondere kann auch folgendes gelten:

$$b \neq c.$$

Bei den vorstehenden Erläuterungen der verschiedenen Ausführungsformen wurde davon ausgegangen, dass der Absolutbetrag der Schrägungswinkel $\beta_1$, $\beta_2$ der Verzahnung in den einzelnen Zahnradabschnitten 5 bis 8 gleich gross sind. Denkbar ist jedoch auch, dass die Zahnradabschnitte, die zur gleichen Welle gehören, unterschiedliche Schrägungswinkel $\beta_1$, $\beta_2$ aufweisen, d.h. $|\beta_1|$ ist nicht gleich $|\beta_2|$. Daraus ergibt sich eine Reihe von weiteren Ausführungsformen, einerseits ausgehend von den vorstehend erläuterten Ausführungsvarianten, anderseits unabhängig von diesen.

In Anwendung des angestrebten Zieles, nämlich die Reduzierung oder gar Vermeidung von auf die Wellen wirkenden axialen Kräften, ist bei unterschiedlichen Schrägungswinkeln $\beta_1$, $\beta_2$ der Verzahnung auf eine "Kräftebalance" zu achten. So ist die Axialkraftentwicklung umso grösser, je grösser ein Schrägungswinkel $\beta_1$, $\beta_2$ ist. Aus diesem Grund sind Zahnradabschnitte mit grossen Schrägungswinkeln $\beta_1$, $\beta_2$ kürzer als Zahnradabschnitte mit kleinen Schrägungswinkeln $\beta_1$, $\beta_2$.

Bei allen vorstehend erläuterten Ausführungsformen der vorliegenden Erfindung ist denkbar, dass mindestens ein Übergang zwischen der Wellenoberfläche und einer Stirnseite eines der Wellenabschnitte 5 bis 8 spannungsoptimiert ausgebildet sind. Dies bedeutet, dass Spannungsspitzen, die im verwendeten Material aufgrund von sprunghaften Übergängen - d.h. Kanten oder Kerben - entstehen können, vermieden werden. Eine spannungsoptimierte Ausgestaltung der Übergänge kann beispielsweise durch einen sanften - d.h. stetigen - Übergang von der Wellenoberfläche zur stirnseitigen Wellenabschnitt 5 bis 8 oder durch einen so genannten Hinterstich, der selbst möglichst keine Kanten bzw. Kerben aufweist, verhindert oder zumindest reduziert werden.

## Patentansprüche

1. Verfahren zur Herstellung von im wesentlichen aus einem Werkstück bestehenden Wellen (1, 2) für Zahnradpumpen mit pfeilverzahnten Zahnrädern, **dadurch gekennzeichnet, dass** eine Ausnehmung (11, 12) in der Form eines Hinterstiches zwischen zwei Zahnradabschnitten (5, 6; 7, 8) mit Schrägungswinkeln ($\beta_1$, $\beta_2$) der Verzahnung eingearbeitet wird, dass mindestens ein Füllelement (13, 14) in die Ausnehmung (11, 12) eingebracht wird und dass das mindestens eine Füllelement (13, 14) entsprechend einem der angrenzenden Zahnradabschnitten (5, 6; 7, 8) ausgebildet wird.

2. Verfahren nach Anspruch 1, **dadurch gekennzeichnet, dass** das mindestens eine Füllelement (13, 14) mit der Welle (1, 2) fest verbunden wird.

3. Verfahren nach Anspruch 1, **dadurch gekennzeichnet, dass** das mindestens eine Füllelement (13, 14) aus mindestens zwei Segmenten gebildet ist, die miteinander fest verbunden werden.

4. Welle (1, 2), die im wesentlichen aus einem Werkstück besteht und mindestens zwei Zahnradabschnitte (5, 6; 7, 8) mit Schrägungswinkeln ($\beta_1$, $\beta_2$) der Verzahnung aufweist, **dadurch gekennzeichnet, dass** zwischen den mindestens zwei Zahnradabschnitten (5, 6; 7, 8) eine Ausnehmung (11, 12) in der Form eines Hinterstichs zur Aufnahme eines Füllelementes (13, 14) vorgesehen ist und dass das Füllelement (13, 14) entsprechend einem der angrenzenden Zahnradabschnitte (5, 6; 7, 8) ausgebildet ist.

5. Welle (1, 2) nach Anspruch 4, **dadurch gekennzeichnet, dass** die Ausnehmung (11, 12) mindestens bis zum Zahnfusskreis reicht.

6. Welle (1, 2) nach einem der Ansprüche 4 bis 5, **dadurch gekennzeichnet, dass** die Ausnehmung (11, 12) um die halbe Breite der Ausnehmung (11, 12) aus der Mitte des Verzahnungsbereiches (10) versetzt ist.

7. Welle (1, 2) nach einem der Ansprüche 4 bis 6, **dadurch gekennzeichnet, dass** das Füllelement (13, 14) die gleichen Verzahnungsdaten aufweist wie diejenigen im angrenzenden Zahnradabschnitt (5, 6; 7, 8).

8. Welle (1, 2) nach einem der Ansprüche 4 bis 5, **da-**

**durch gekennzeichnet, dass** die Füllelemente (13, 14) ringförmig mit flacher Oberfläche ausgebildet sind.

9. Welle (1, 2) nach einem der Ansprüche 4 bis 8, **dadurch gekennzeichnet, dass** die Zahnradabschnitte (5, 6; 7, 8) unterschiedliche absolute Schrägungswinkel ($\beta_1$, $\beta_2$) der Verzahnung aufweisen.

10. Welle (1, 2) nach einem der Ansprüche 4 bis 9, **dadurch gekennzeichnet, dass** mindestens ein Übergang von Wellenoberfläche auf stirnseitige Fläche der Zahnradabschnitte (5, 6; 7, 8) spannungsoptimiert ausgebildet sind.

11. Zahnradpumpe mit mindestens einer Welle (1, 2) nach einem oder mehreren der Ansprüche 4 bis 10.

12. Verwendung der Zahnradpumpe nach Anspruch 11 zur Förderung von hochviskosen Medien, insbesondere von Polymeren und von Kautschuk.

**Claims**

1. Method for manufacturing a workpiece substantially consisting of shafts (1, 2) for gear pumps with herringbone gearings, **characterized in that** a recess (11, 12) in form of a backed stitch is incorporated between two gear sections (5, 6; 7, 8) with helix angles ($\beta$1, $\beta$2) of the gearing, that at least one fill-in element (13, 14) is brought into the recess (11,12) and that the at least one of the filling element (13, 14) is formed according to one of the adjacent gear sections (5, 6; 7, 8).

2. Method according to claim 1, **characterized in that** the at least one fill-in element (13, 14) is firmly connected to the shaft (1, 2).

3. Method according to claim 1, **characterized in that** at least one of the fill-in element (13, 14) is made of two segments, which are firmly connected to each other.

4. Shaft (1, 2), which essentially consists out of a workpiece and comprises at least two gear sections (5, 6; 7, 8) with helix angles ($\beta$1, $\beta$2) of the gearing, **characterized in that** a recess (11, 12) for receiving a fill-in element (13, 14) in form of a backed stitch is provided between the at least two gear sections (5, 6; 7, 8) and that the fill-in element (13, 14) is formed according to one of the adjacent gear sections (5, 6; 7, 8).

5. Shaft (1, 2) according to claim 4, **characterized in that** the recess (11, 12) at least reaches the circle base of a tooth of the gear wheel.

6. Shaft (1, 2) according to one of the claims 4 to 5, **characterized in that** the recess (11, 12) is displaced by the half of the width of the recess (11, 12) out of the middle of the intermeshing section (10).

7. Shaft (1, 2) according to one of the claims 4 to 6, **characterized in that** the fill-in element (13, 14) comprises the same gearing data like those in the adjacent gear section (5, 6; 7, 8).

8. Shaft (1, 2) according to one of the claims 4 to 5, **characterized in that** the fill-in elements (13, 14) are formed ring-shaped with flat surface.

9. Shaft (1, 2) according to one of the claims 4 to 8, **characterized in that** the gear sections (5, 6; 7, 8) comprise different absolute helix angles ($\beta$1, $\beta$2) of the gearing.

10. Shaft (1, 2) according to one of the claims 4 to 9, **characterized in that** at least one transition of the face of the shaft to the frontal face of the gear sections (5, 6; 7, 8) are formed in tension optimized manner.

11. Gear pump with at least one shaft (1, 2) according to one or more of the claims 4 to 10.

12. Use of the gear pump according to claim 11 for feeding high viscous media, preferably polymers and rubber.

**Revendications**

1. Procédé pour la fabrication d'une pièce d'oeuvre pour l'essentiel se composant des broches (1, 2) pour pompes avec roues d'engrenages à chevrons, **caractérisé en ce qu'**un creux (11, 12) sous forme de dépouille au tour est incorporé entre deux sections d'engrenages (5, 6; 7, 8) avec des angles d'hélice ($\beta$1, $\beta$2) de l'engrenage, qu'au moins un élément de remplissage (13, 14) est rentré dans le creux (11, 12) et qu'au moins un de l'élément de remplissage (13, 14) est formé selon une des sections d'engrenages (5, 6,; 7, 8) avoisinantes.

2. Procédé selon la revendication 1, **caractérisé en ce qu'**au moins un de l'élément de remplissage (13, 14) est relié à la broche (1, 2) de manière solide.

3. Procédé selon la revendication 1, **caractérisé en ce qu'**au moins un de l'élément (13, 14) est formé au moins de deux segments qui sont reliés de manière solide de l'un à l'autre.

4. Broche (1, 2) qui pour l'essentiel consiste d'une pièce d'oeuvre et comprend au moins deux sections d'engrenages (5, 6; 7, 8) avec deux angles d'hélice (β1, β2) de l'engrenage, **caractérisée en ce qu'**un creux (11, 12) pour recevoir un élément de remplissage (13, 14) sous forme de dépouille au tour est prévu et que l'élément de remplissage (13, 14) est formé selon un des sections d'engrenages (5, 6; 7, 8) avoisinantes.

5. Broche (1, 2) selon la revendication 4, **caractérisée en ce que** le creux (11, 12) s'éteint jusqu'au cercle du pied de dent.

6. Broche (1, 2) selon une des revendications 4 à 5, **caractérisée en ce que** le creux (11, 12) est décalé de la moitié de la largeur du creux (11, 12) du centre de la région d'engrenage (10).

7. Broche (1, 2) selon une des revendications 4 à 6, **caractérisée en ce que** l'élément de remplissage (13, 14) comprend les mêmes données d'engrenage comme celles dans la section d'engrenage (5, 6; 7, 8) avoisinante.

8. Broche (1, 2) selon une des revendications 4 à 5, **caractérisée en ce que** les éléments de remplissage (13, 14) sont formés annulaires avec surface plate.

9. Broche (1, 2) selon une des revendications 4 à 8, **caractérisée en ce que** les sections d'engrenage (5, 6; 7, 8) comprennent des angles d'hélice (β1, β2) absolus différents de l'engrenage.

10. Broche (1, 2) selon une des revendications 4 à 9, **caractérisée en ce qu'**au moins une transition de la surface de broche à la face frontale des sections d'engrenage (5, 6, 7, 8) est formée de manière tension optimisée.

11. Pompe à engrenages avec au moins une broche (1, 2) selon une ou plusieurs des revendications 4 à 10.

12. Usage d'une pompe à engrenages selon la revendication 11 pour alimenter des milieux de grande viscosité, en particulier des polymères et du caoutchouc.

FIG.1

FIG.2

FIG.3

FIG.4

**IN DER BESCHREIBUNG AUFGEFÜHRTE DOKUMENTE**

**In der Beschreibung aufgeführte Patentdokumente**

- DE 10300407 B3

**In der Beschreibung aufgeführte Nicht-Patentliteratur**

- Ausgeflattert - Schmelzepumpe für hochwertige Extrudate. *Plastverarbeiter,* vol. 49 (9), 50